# EUROPÄISCHE PATENTSCHRIFT

(11) **EP 1 738 954 B1**
(45) Veröffentlichungstag und Bekanntmachung des Hinweises auf die Patenterteilung: **29.09.2010**
(21) Anmeldenummer: 06002170.6
(22) Anmeldetag: 02.02.2006
(51) Int. Cl.: B60N 2/48, F15B 15/19, F15B 15/14

(54) **Auslösevorrichtung**
Releasing assembly
Dispositif de déclenchement

(30) Priorität: 01.07.2005 GB 0513278
(43) Veröffentlichungstag der Anmeldung: 03.01.2007
(73) Patentinhaber: Delphi Technologies, Inc., Troy, MI 48007 (US)
(72) Erfinder: Frank, Harald, 96275 Marktzeuln (DE); Storath, Josef, 91301 Forchheim (DE); Albrecht, Uwe, 90478 Nürnberg (DE)
(74) Vertreter: Denton, Michael John

(56) Entgegenhaltungen:
- EP-A- 1 186 786
- DE-A1- 10 001 329
- DE-A1- 10 030 545
- DE-A1- 19 650 321
- US-A1- 2005 116 457
- US-B1- 6 213 548
- US-B1- 6 478 373

## Beschreibung

Die vorliegende Erfindung betrifft eine Auslösevorrichtung für eine Betätigungseinheit zum Bewegen einer Kopfstütze in eine vorbestimmte Position.

In modernen Kraftfahrzeugen sind die Kopfstützen zumindest der Vordersitze jeweils mit einer Betätigungseinheit versehen, die dazu dient, die Kopfstütze im Fall eines Unfalls in eine Position zu bewegen, in der der in dem Sitz sitzende Fahrzeuginsasse so weit wie möglich vor Verletzungen der Halswirbelsäule geschützt ist. Die Betätigungseinheit der Kopfstütze wird dabei von einer Auslösevorrichtung ausgelöst, die im Fall eines Unfalls ein entsprechendes Signal von einer elektronischen Steuereinheit erhält.

Aus dem Stand der Technik sind Auslösevorrichtungen bekannt, die elektromagnetische Betätigungssysteme verwenden, mit deren Hilfe die Kopfstütze in eine vorbestimmte Position bewegt wird. Derartige Vorrichtungen haben den Nachteil, dass sie vergleichsweise langsam reagieren, und daher bei einem Unfall bei hoher Geschwindigkeit nicht immer eine rechtzeitige Bewegung der Kopfstütze gewährleistet ist. Zudem ist eine Energieversorgung für das elektromagnetische System notwendig, was sich ungünstig auf den benötigten Einbauraum und die Herstellungskosten auswirkt.

Aus der US-B1-6 478 373 ist eine Auslösevorrichtung nach dem Oberbegriff des Anspruchs 1 bekannt, die einen pyrotechnischen Gasgenerator und ein Auslöseelement umfasst, das von einer Sperrstellung in eine Freigabestellung bewegbar ist. Der pyrotechnische Gasgenerator wird im Fall eines Unfalls gezündet und ruft eine Bewegung des Auslöseelementes von einer Sperrstellung in eine Freigabestellung hervor. In der Sperrstellung kann die Kopfstütze beispielsweise gegen eine von einer Feder erzeugte Vorspannung gehalten werden. Nach dem Zünden des pyrotechnischen Gasgenerators wird das Auslöseelement in die Freigabestellung bewegt und die Kopfstütze dadurch entriegelt, so dass sie durch die Vorspannung in die vorbestimmte Position bewegt wird, welche einen maximalen Schutz der in dem Fahrzeugsitz sitzenden Person gewährleistet.

Pyrotechnische Gasgeneratoren werden beispielsweise zum Aufblasen von Airbags bei einem Aufprall des Fahrzeugs verwendet und haben den Vorteil einer sehr kurzen Reaktionszeit. Zudem sind sie vergleichsweise kostengünstig und Platz sparend, so dass die Verwendung des pyrotechnischen Gasgenerators anstelle einer elektromagnetischen Auslösevorrichtung zum einen eine kurze Reaktionszeit gewährleistet, zum anderen aber auch zu einer Kostensenkung beiträgt.

Der vorliegenden Erfindung liegt die Aufgabe zugrunde, eine Auslösevorrichtung nach dem Oberbegriff des Anspruchs 1 zur Verfügung zu stellen, die möglichst schnell und zuverlässig die gewünschte Bewegung der Kopfstütze hervorruft und dabei trotzdem möglichst kostengünstig produziert werden kann.

Diese Aufgabe wird ausgehend vom Oberbegriff des Anspruchs 1 durch eine Auslösevorrichtung mit den kennzeichnenden Merkmalen des Anspruchs 1 gelöst.

Erfindungsgemäß weist die Auslösevorrichtung einen durch eine Zündung des pyrotechnischen Gasgenerators verschiebbaren Kolben auf. Mit Hilfe eines solchen Kolbens kann das Auslöseelement auf einfache Weise von der Sperrstellung in die Freigabestellung bewegt werden.

Zudem liegt der Kolben in einer Ruheposition zumindest teilweise innerhalb einer Druckkammer des Gasgenerators und ist durch eine Zündung des Gasgenerators in Richtung aus der Druckkammer heraus verschiebbar. Eine solche Anordnung zeichnet sich durch eine besondere Einfachheit aus, da der durch die Zündung des pyrotechnischen Gasgenerators erzeugte Druck direkt an den teilweise in der Druckkammer liegenden Kolben weitergegeben und in eine Bewegung des Kolbens umgewandelt wird. Diese Anordnung hat zudem den Vorteil, sehr Platz sparend zu sein, so dass die gesamte Auslösevorrichtung vorteilhafterweise in der Kopfstützenhalterung untergebracht werden kann.

Nach der Erfindung weist der Kolben eine durchgehende Bohrung auf, deren eines Ende in die Druckkammer mündet. Durch diese Bohrung kann ein Teil des generierten Gases entweichen, so dass der sich nach der Zündung des pyrotechnischen Gasgenerators aufbauende hohe Druck begrenzt werden kann. Durch eine geeignete Wahl des Durchmessers der durch den Kolben verlaufenden Bohrung kann die maximal zu erreichende Höhe des Drucks gesteuert werden.

Auch ist das andere Ende der Bohrung in einem Ruhezustand des Kolbens verdeckt und nach einem Verschieben des Kolbens durch eine Zündung des Gasgenerators nicht mehr verdeckt. Somit kann zunächst kein Gas aus der Druckkammer entweichen, und der gesamte entstehende Druck wird dazu genutzt, eine Verschiebung des Kolbens zu bewirken. Wenn diese Verschiebung herbeigeführt worden ist, wird die Bohrung freigelegt, so dass das Gas nun aus der Druckkammer entweichen kann. Dadurch wird verhindert, dass sich ein zu hoher Druck in der Kammer aufbaut, der eventuell zu einer Beschädigung der Kopfstütze und den sie umgebenden Teilen oder gar zu einer Verletzung der Fahrzeuginsassen führen kann.

Die Abdeckung der in dem Kolben ausgebildeten Bohrung kann von dem Auslöselement gebildet sein, das von einer Sperrstellung in eine Freigabestellung bewegbar ist. Beispielsweise können ein Hebelelement allein oder mehrere Hebelelemente gemeinsam das Auslöseelement bilden und eine Verschiebung des Kolbens an die Kopfstütze übertragen. Dieses Auslöseelement kann nun nicht nur zur Übertragung der Bewegung von dem Kolben an die Kopfstütze, sondern auch zur Abdeckung der in dem Kolben ausgebildeten Bohrung verwendet werden. In der Sperrstellung verdeckt das Auslöseelement die Bohrung, so dass sich zunächst ein ausreichend hoher Druck aufbauen kann, um eine Bewegung des Kolbens und damit des Auslöseelementes in Gang zu setzen. Wenn das Auslöseelement in die Freigabestellung bewegt worden ist, ist das durch die Auslösung des Gasgenerators herbeizuführende Ziel erreicht, und der innerhalb der Druckkammer entstandene Überdruck kann nun durch Freigabe der Bohrung abgelassen werden.

Gemäß einer vorteilhaften Ausführungsform der Erfindung sitzt der Gasgenerator in einem Gehäusekörper, und eine von einem Deckel verschlossene Ausnehmung in dem Gehäusekörper bildet eine Druckkammer. Auf diese Weise kann mit vergleichsweise geringem Aufwand eine gasdicht abgeschlossene Druckkammer gebildet werden, deren Wände auch hohem Druck standhalten.

Vorzugsweise ist die Druckkammer an einer Seite von einem Deckel begrenzt, der eine mit einer Führung für den Kolben versehene Öffnung besitzt, durch die der Kolben verläuft. Der Deckel verschließt somit nicht nur die Druckkammer, sondern bildet auch eine Halterung für den Kolben.

Vorzugsweise ist der Deckel an einem Gehäusekörper befestigt, in dem die Druckkammer ausgebildet ist. Besonders vorteilhaft ist eine Befestigung mittels eines Ultraschall-Schweißverfahrens, da auf diese Weise eine gasdichte und hohen Drücken standhaltende Verbindung des Deckels mit dem Gehäusekörper erzielt wird. Der Deckel verschließt die Druckkammer und kann, wie oben bereits erwähnt, gleichzeitig als Halterung für einen durch eine Öffnung in dem Deckel verlaufenden beweglichen Kolben dienen.

Im Folgenden soll die Erfindung anhand eines bevorzugten Ausführungsbeispiels und unter Bezugnahme auf die beiden beigefügten Figuren genauer beschrieben werden.

Die Figuren zeigen dabei:
- Fig. 1:: einen Querschnitt durch eine Auslösevorrichtung, deren Auslöse-element sich in einer Sperrstellung befindet, und
- Fig. 2:: einen Querschnitt durch die Auslösevorrichtung aus Figur 1, deren Auslöseelement sich in einer Freigabestellung befindet.

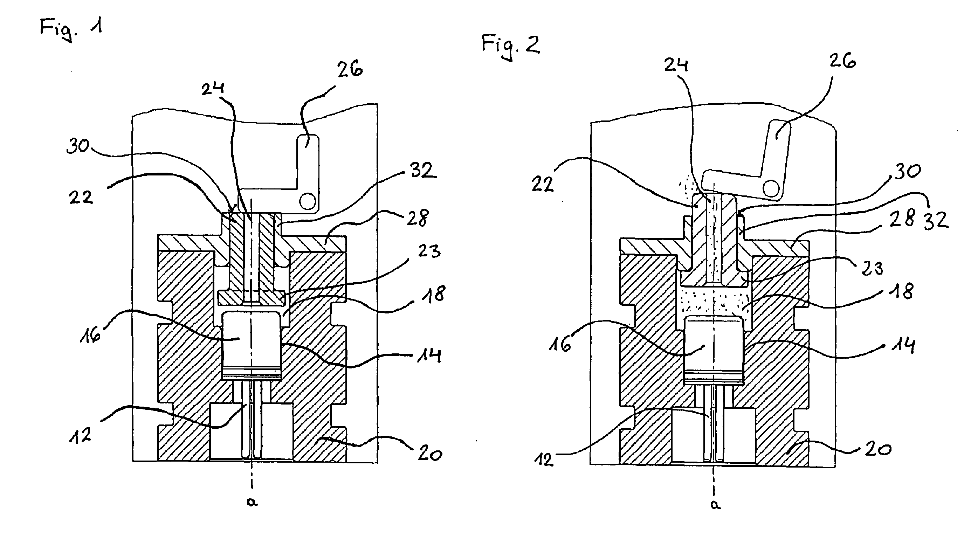

Die beiden Figuren zeigen einen Querschnitt durch eine Auslösevorrichtung für eine Betätigungseinheit zum Bewegen einer in den Figuren nicht dargestellten Kopfstütze oder Überrollschutzvorrichtung. Die dargestellte Auslösevorrichtung umfasst einen in einem Gehäusekörper 20 sitzenden pyrotechnischen Gasgenerator und ein Auslöseelement 26 in Form eines Hebelelementes, das über einen beweglichen Kolben 22 mit dem Gasgenerator in Wirkverbindung steht, wie im Folgenden noch erläutert werden wird. In Fig. 1 ist die Auslösevorrichtung vor dem Zünden des Gasgenerators und in Fig. 2 nach dem Zünden des Gasgenerators dargestellt.

Der Gehäusekörper 20 ist im Wesentlichen zylindrisch und rotationssymmetrisch in Bezug auf eine Symmetrieachse a der gesamten Auslösevorrichtung. Der pyrotechnische Gasgenerator umfasst einen ebenfalls symmetrisch zu dieser Symmetrieachse a in dem Gehäusekörper 20 sitzenden Zünder 12, der durch ein entsprechendes Signal von einer in den Figuren nicht dargestellten elektronischen Steuereinheit gezündet wird. Diese Zündung führt zur Verbrennung einer in den Figuren nicht sichtbaren Treibladung 14, die in einem Raum angeordnet ist, der von einer auf dem Zünder sitzenden Kappe 16 gebildet wird. Die Kappe 16 besitzt in etwa die Form eines unten offenen Zylinders und ist vorzugsweise aus Stahl ausgebildet. Beim Verbrennen der Treibladung 14 werden Gase freigesetzt, die den Druck in dem von der Kappe 16 begrenzten Raum ansteigen lassen. Wenn ein gewisser Druck erreicht ist, wird die Kappe 16 zerstört, bzw. eine hierfür vorgesehene Durchströmöffnung öffnet sich, und das durch die Verbrennung der Treibladung 14 entstehende Gas kann in eine im Wesentlichen oberhalb der Kappe 16 liegende Druckkammer 18 entweichen. Diese Druckkammer 18 besitzt ebenfalls die gleiche Symmetrieachse a wie der Zünder 12 und die Kappe 16 und ist als zylindrische Ausnehmung in einem oberen Bereich des zylindrischen Gehäusekörpers 20 ausgebildet.

Oben auf dem Gehäusekörper 20 sitzt ein Deckel 28, der die Druckkammer 18 verschließt und der beispielsweise mit Hilfe eines Ultraschall-Schweißverfahrens an dem Gehäusekörper 20 befestigt ist. In dem Deckel 28 ist mittig eine kreisrunde Öffnung 30 ausgebildet, deren Durchmesser kleiner ist als der der die Druckkammer 18 bildenden Ausnehmung in dem Gehäusekörper 20. Die Ränder dieser Öffnung 30 bilden eine rohrförmige Führung 32 für einen axial verschieblichen Kolben 22, dessen Außendurchmesser dem Innendurchmesser der Öffnung 30 entspricht. Der Kolben 22 ist im Wesentlichen zylindrisch, wobei seine Längsachse mit der Symmetrieachse a der Druckkammer 18 und des Gehäusekörpers 20 zusammenfällt, und ist an seiner Unterseite flanschartig verbreitert.

In dem in Fig. 1 dargestellten Zustand vor der Zündung des Gasgenerators schließt der Kolben 22 an seiner Oberseite bündig mit der Führung 32 ab und ragt an seiner Unterseite in die Druckkammer 18 hinein. Die bereits erwähnte, unten an dem Kolben vorgesehene flanschartige Verbreiterung 23 verhindert, wie man in Fig. 2 erkennt, dass der Kolben 22 nach der Zündung des Gasgenerators vollständig durch die Öffnung 30 in dem Deckel 28 aus der Druckkammer 18 heraus gedrückt wird.

Der Kolben 22 weist eine in Längsrichtung über die gesamte Länge des Kolbens durch seine Symmetrieachse a verlaufende Bohrung 24 auf, die in dem in der Fig. 1 dargestellten Zustand an der Oberseite von einem Hebelelement 26 verschlossen ist.

Nach der Zündung des Zünders 12 und der darauf folgenden Verbrennung der Treibladung 14 erhöht sich, wie oben bereits erwähnt, zunächst der Druck unter der Kappe 16. Dies führt schließlich zu einer Zerstörung der Kappe, so dass das entstehende Gas in die Druckkammer 18 strömt, und sich dort ein Überdruck aufbaut. Durch diesen Druck wird der Kolben 22 nach oben verschoben, bis er mit seiner flanschartigen Verbreiterung 23 von unten an der Führung 32 in dem Deckel 28 anschlägt. Durch die Bewegung des Kolbens 22 wird das Hebelelement 26 von der in Fig. 1 dargestellten Sperrstellung in die in Fig. 2 dargestellte Freigabestellung bewegt. Gleichzeitig wird durch die Bewegung des Hebelelementes 26 die Bohrung 24 in dem Kolben 22 an ihrer Oberseite freigegeben, so dass das Gas durch die Bohrung 24 aus der Druckkammer 18 entweichen kann. Die mit dem Hebelelement 26 in Wirkverbindung stehende Kopfstütze befindet sich zu diesem Zeitpunkt bereits in der gewünschten vorbestimmten Position.

Die vorliegende Erfindung ist selbstverständlich nicht nur auf eine Kopfstütze, sondern auch auf einen Überrollbügel oder dergleichen anwendbar.

### Bezugszeichenliste

- 12: Zünder
- 14: Treibladung
- 16: Kappe
- 18: Druckkammer
- 20: Gehäusekörper
- 22: Kolben
- 23: flanschartige Verbreiterung
- 24: Bohrung in Kolben
- 26: Hebelelement
- 28: Deckel
- 30: Öffnung in Deckel
- 32: Führung für Kolben
- a: Symmetrieachse

## Patentansprüche

1. Auslösevorrichtung für eine Betätigungseinheit zum Bewegen einer Kopfstütze in eine vorbestimmte Position, wobei die Auslösevorrichtung einen pyrotechnischen Gasgenerator und ein Auslöseelement (26) umfasst, das von einer Sperrstellung in eine Freigabestellung bewegbar ist,
**dadurch gekennzeichnet,**
**dass** sie einen durch eine Zündung des Gasgenerators verschiebbaren Kolben (22) aufweist, und
**dass** der Kolben (22) in einer Ruheposition zumindest teilweise innerhalb einer Druckkammer (18) des Gasgenerators liegt und durch eine Zündung des Gasgenerators in Richtung aus der Druckkammer (18) heraus verschiebbar ist,
**dass** der Kolben (22) eine durchgehende Bohrung (24) aufweist, deren eines Ende in die Druckkammer (18) mündet, und
**dass** das andere Ende der Bohrung (24) in einem Ruhezustand des Kolbens (22) verdeckt ist und nach einem Verschieben des Kolbens (22) durch eine Zündung des Gasgenerators nicht mehr verdeckt ist.

2. Auslösevorrichtung nach Anspruch 1,
**dadurch gekennzeichnet,**
**dass** die Abdeckung der in dem Kolben (22) ausgebildeten Bohrung (24) von dem Auslöseelement (26) gebildet wird, das eine Verschiebung des Kolbens (22) an die Kopfstütze überträgt.

3. Auslösevorrichtung nach einem der vorstehenden Ansprüche,
**dadurch gekennzeichnet,**
**dass** der Gasgenerator in einem Gehäusekörper (20) sitzt, und eine von einem Deckel (28) verschlossene Ausnehmung in dem Gehäusekörper (20) eine Druckkammer (18) bildet.

4. Auslösevorrichtung nach Anspruch 3,
**dadurch gekennzeichnet,**
**dass** die Druckkammer (18) an einer Seite von einem Deckel (28) begrenzt ist, der eine mit einer Führung (32) für den Kolben (22) versehene Öffnung (30) besitzt, durch die der Kolben (22) verläuft.

5. Auslösevorrichtung nach Anspruch 3 oder 4,
**dadurch gekennzeichnet,**
**dass** der Deckel (28) an einem Gehäusekörper (20) befestigt ist, in dem die Druckkammer (18) ausgebildet ist, insbesondere mittels eines Ultraschall-Schweißverfahrens.

6. Auslösevorrichtung nach einem der vorstehenden Ansprüche,
**dadurch gekennzeichnet,**
**dass** das Auslöselement wenigstens ein Hebelelement (26) umfasst, das mit der Kopfstütze in Wirkverbindung steht.

## Claims

1. Releasing device for an actuating unit for moving a headrest into a predetermined position, wherein the releasing device includes a pyrotechnic gas generator and a releasing element (26), which is movable from a locking position to a release position,
**characterized in that**
it comprises a piston (22) movable by an ignition of the gas generator, and
the piston (22) in a resting position is located at least partially within a pressure chamber (18) of the gas generator and is movable in direction out of the pressure chamber (18) by an ignition of the gas generator,
the piston (22) comprises a through hole (24), whose one end leads into the pressure chamber (18), and
the other end of the through hole (24) is covered in a resting state of the piston (22) and is no longer covered subsequent to displacement of the piston (22) by an ignition of the gas generator.

2. Releasing device according to claim 1,
**characterized in that**
the cover of the through hole (24) formed in the piston (22) is formed of the releasing element (26), which transmits a displacement of the piston (22) to the headrest.

3. Releasing device according to any of the preceding claims,
**characterized in that**
the gas generator is located in a housing body (20), and a recess in the housing body (20), closed by a cover (28), forms a pressure chamber (18).

4. Releasing device according to claim 3,
**characterized in that**
the pressure chamber (18) is limited on one side by a cover (28) having an opening (30) provided with a guide (32) for the piston (22), through which the piston (22) runs.

5. Releasing device according to claim 3 or 4,
**characterized in that**
the cover (28) is attached to a housing body (20), in which the pressure chamber (18) is formed, in particular by means of an ultrasonic welding procedure.

6. Releasing device according to any of the preceding claims,
**characterized in that**
the releasing element includes at least one lever element (26) in operational connection with the headrest.

## Revendications

1. Dispositif de déclenchement pour une unité d'actionnement destinée à déplacer un appui-tête jusque dans une position prédéterminée, ledit dispositif de déclenchement comprenant un générateur de gaz pyrotechnique et un élément de déclenchement (26) qui est déplaçable depuis une position de verrouillage jusque dans une position de libération,
**caractérisé en ce que**
il comprend un piston (22) déplaçable par un amorçage du générateur de gaz, et
**en ce que** le piston (22) se trouve, dans une position de repos, au moins partiellement à l'intérieur d'une chambre à pression (18) du générateur de gaz et est déplaçable par amorçage du générateur de gaz en direction sortante hors de la chambre de pression (18),
**en ce que** le piston (22) comporte un perçage traversant (24) dont une extrémité débouche dans la chambre de pression (18), et
**en ce que** l'autre extrémité du perçage (24) est couverte dans un état de repos du piston (22) et n'est plus couverte après un déplacement du piston (22) par un amorçage du générateur de gaz.

2. Dispositif de déclenchement selon la revendication 1,
**caractérisé en ce que** le recouvrement du perçage (24) réalisé dans le piston (22) est constitué par l'élément de déclenchement (26) qui transmet un déplacement du piston (22) à l'appui-tête.

3. Dispositif de déclenchement selon l'une des revendications précédentes,
**caractérisé en ce que** le générateur de gaz est logé dans un corps de boîtier (20), et un évidement, refermé par un couvercle (28), forme une chambre de pression (18) dans le corps de boîtier (20).

4. Dispositif de déclenchement selon la revendication 3,
**caractérisé en ce que** la chambre de pression (18) est délimitée sur un côté par un couvercle (28), lequel possède une ouverture (30) muni d'un guidage (32) pour le piston (22) et à travers laquelle s'étend le piston (22).

5. Dispositif de déclenchement selon la revendication 3 ou 4,
**caractérisé en ce que** le couvercle (28) est fixé sur un corps de boîtier (20) dans lequel est ménagée la chambre de pression (18), en particulier au moyen d'un procédé de soudage aux ultrasons.

6. Dispositif de déclenchement selon l'une des revendications précédentes,
**caractérisé en ce que** l'élément de déclenchement comprend au moins un élément à levier (26) qui est en coopération d'action avec l'appui-tête.
